# EUROPEAN PATENT SPECIFICATION

(11) **EP 4 350 085 B1**
(45) Date of publication and mention of the grant of the patent: **15.07.2026**
(21) Application number: 22815679.0
(22) Date of filing: 29.03.2022
(51) Int. Cl.: E02F 9/20, E02F 9/24, E02F 9/26, H04N 7/18

(54) **WORK MANAGEMENT SYSTEM AND WORK MACHINE**
ARBEITSVERWALTUNGSSYSTEM UND ARBEITSMASCHINE
SYSTÈME DE GESTION DE TRAVAIL ET MACHINE DE TRAVAIL

(30) Priority: 04.06.2021 JP 2021094328
(43) Date of publication of application: 10.04.2024
(73) Proprietor: Hitachi Construction Machinery Co., Ltd., Tokyo 110-0015 (JP)
(72) Inventor: KANAZAWA Akira, Tokyo 100-8280 (JP); NARIKAWA Ryu, Tokyo 100-8280 (JP); YAMAMOTO Shinjirou, Tsuchiura-shi, Ibaraki 300-0013 (JP); CHIBA Takaaki, Tsuchiura-shi, Ibaraki 300-0013 (JP); IMURA Shinya, Tsuchiura-shi, Ibaraki 300-0013 (JP)
(74) Representative: MERH-IP Matias Erny Reichl Hoffmann Patentanwälte PartG mbB
(86) International application number: PCT/JP2022/015240
(87) International publication number: WO 2022/254922

(56) References cited:
- WO-A1-2018/084161
- WO-A1-2021/065429
- JP-A- 2006 188 353
- JP-A- 2010 198 519
- JP-A- 2018 116 323
- JP-A- 2019 169 778
- JP-A- 2021 022 170
- JP-A- 2021 022 170
- JP-A- 2021 050 587
- JP-A- 2021 050 587
- US-A1- 2021 158 674

## Description

### Technical Field

The present invention relates to a work management system that manages the safety of workers performing work near work machines. A system according to the prior art is disclosed in document JP 2021 050587 A.

### Background Art

There is a fear that a nearby worker and a work machine contact each other at a construction work site, and there is a need for a function for preventing contact between a nearby worker and a work machine. Particularly, for the purpose of preventing contact between a nearby worker and a work machine before it happens, there are systems that have started being put into practical use, in which systems positional information obtained from sensors attached to a nearby worker and a work machine is aggregated at a management server, and monitoring, warning, and displaying are performed about inappropriate events such as approach of a work machine toward a nearby worker or entry of a nearby worker into an entry-prohibited area. Introduction of such systems has enabled managers of construction sites to simply and conveniently grasp in real time inappropriate events that have occurred at the sites.

As an example of the prior art in which positional information about nearby workers and work machines is aggregated at a management server, and inappropriate events are monitored and are presented to a manager, technologies like the one in Patent Document 1 have been disclosed. Patent Document 1 discloses a managing apparatus that detects entry of an obstacle into a predetermined area near a machine, and, on the basis of the history of detection results and related information at the time of entry, generates a table on which the relation between the degree of entry of the obstacle into the predetermined area and entry-related information can be checked.

### Prior Art Document

### Patent Document

Patent Document 1: WO 2018/084161

### Summary of the Invention

### Problem to be Solved by the Invention

Contact between a nearby worker and a work machine occurs due to a human error of the nearby worker or an operator who operates the work machine. Conceivable situations where the operator side of a work machine becomes a cause of a human error include a situation where an operator of a work machine touches an operation lever unintendedly while the operator fails to lock the machine body when machine actions are inactivated, and a situation where an operator of a work machine operates the work machine carelessly near a nearby worker. On the other hand, conceivable situations where the nearby worker side becomes a cause of a human error include a situation where a nearby worker approaches a work machine from a direction which is difficult for an operator to see, a situation where a nearby worker fails to give the cue before approach, and the like. Accordingly, in order to more accurately evaluate the likelihood of contact events, it is necessary to consider the states of both a nearby worker and a work machine at the time of occurrence of an approach event.

In a system like the one described in Patent Document 1, although information about the position and time at which approach is detected, and about the operational status of a work machine is provided to a manager, it does not take into consideration under what situation each of a nearby worker and an operator of the work machine have been. Accordingly, it is difficult for the manager to correctly determine the likelihood of contact in an approach event that has occurred, and it is difficult to select approach information that should be used for risk assessment for the future or safety education of site workers from among an enormous amount of provided approach information. Since it is predicted that approach between nearby workers and work machines occurs frequently, it is desirable if the manager can efficiently extract only approach events that should be avoided in the future.

The present invention has been made in view of the problem described above, and an object of the present invention is to provide a work management system that enables efficient extraction of approach events that are likely to result in contact between a work machine and a worker.

### Means for Solving the Problem

In order to achieve the object described above, in the present invention, a work management system including a management server, and a display apparatus that displays information outputted from the management server includes: a work machine position measuring apparatus that measures positional information about a work machine; a work machine state measuring apparatus that measures a state of the work machine; and a worker position measuring apparatus that measures positional information about a worker who performs work near the work machine. Further, the management server: assesses approach between the work machine and the worker on the basis of the positional information about the work machine measured by the work machine position measuring apparatus, and the positional information about the worker measured by the worker position measuring apparatus; and, when assessing that there is approach, assesses an approached state of the approach from the state of the work machine measured by the work machine state measuring apparatus at the time of the assessment of the approach, on the basis of a preset approached state definition, records the states of the work machine measured at the time of the assessment of the approach, in association with the approached state, and outputs the state to the display apparatus in association with the approached state.

According to the thus-configured present invention, a result of the assessment regarding the approach between the work machine and the worker is displayed in association with the approached state that takes into consideration the state of the work machine at the time of the approach assessment. Accordingly, it becomes possible to efficiently extract approach events that are likely to result in contact between the work machine and the worker. As a result, the effectiveness and efficiency of risk assessment and safety education by the manager are enhanced significantly.

### Advantages of Invention

The work management system according to the present invention enables efficient extraction of approach events that are likely to result in contact between a work machine and a worker.

### Brief Description of the Drawings

FIG. 1 is a figure depicting an overview of a work management system according to a first embodiment of the present invention.
FIG. 2 is a functional block diagram depicting process functions of the work management system according to the first embodiment of the present invention.
FIG. 3 is a figure depicting a processing procedure performed by an approach assessing section in the first embodiment of the present invention.
FIG. 4 is a figure depicting a processing procedure performed by an approached state determining section in the first embodiment of the present invention.
FIG. 5 is a diagram depicting an example of an approached state definition in the first embodiment.
FIG. 6 is a diagram depicting examples of approach results outputted by an approach result visualizing section in the first embodiment.
FIG. 7 is a figure depicting advantages of the present invention according to the first embodiment.
FIG. 8 is a functional block diagram depicting process functions of the work management system according to a second embodiment of the present invention.
FIG. 9 is a diagram depicting an example of the approached state definition in the second embodiment of the present invention.
FIG. 10 is a functional block diagram depicting process functions of the work management system according to a third embodiment of the present invention.
FIG. 11 is a diagram depicting examples of approach results outputted by the approach result visualizing section in the third embodiment of the present invention.
FIG. 12 is a figure depicting a processing procedure performed by the approached state determining section in a fourth embodiment of the present invention.
FIG. 13 is a figure depicting examples of an expression method of degree of fault and advantages of the present invention according to the fourth embodiment of the present invention.
FIG. 14 is a functional block diagram depicting process functions of the work management system according to a fifth embodiment of the present invention.
FIG. 15 is a diagram depicting an example of a definition of measures to be taken regarding the approached state definition in the fifth embodiment of the present invention.

### Modes for Carrying Out the Invention

Hereinbelow, embodiments of the present invention are explained by using the figures or the like. The following explanation depicts specific examples of the content of the present invention. The present invention is not limited to the explanation. Those skilled in the art can make various changes and corrections within the scope of the technical idea disclosed in the present specification. In addition, ones in all the figures for explaining the present invention that have identical functions are given identical reference characters, and repetitive explanations thereof are omitted in some cases.

### First Embodiment

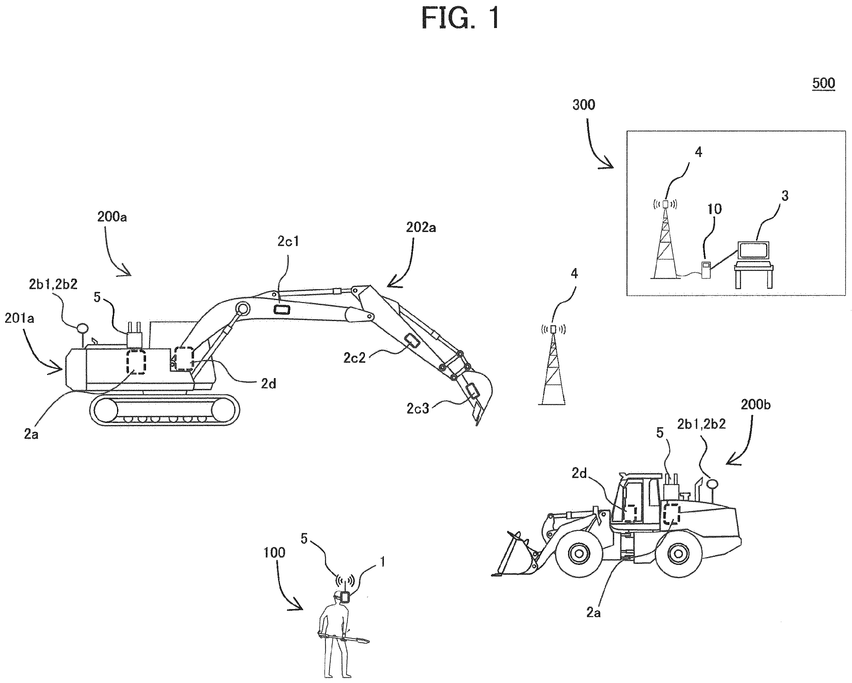

FIG. 1 is a figure depicting an overview of a work management system according to a first embodiment of the present invention. A work management system 500 includes: a worker measuring apparatus 1 attached to a worker 100; a machine measuring apparatus 2 attached to a work machine 200; a display apparatus 3; a communication facility 4; a management server 10; and the like. The worker 100 is a person who performs work in a construction site, and performs work assistance for a work machine 200, peripheral work not directly related to a work machine 200, and the like. The worker 100 has the worker measuring apparatus 1 and a communication terminal 5, and it is assumed that these worker measuring apparatus 1 and communication terminal 5 are attached to a helmet, working clothes, or the like that the worker 100 puts on. It is assumed in the present embodiment that the worker measuring apparatus 1 includes: a sensor 1b for measuring positional information about the worker 100; and a data processing apparatus 1a for processing the information measured by the sensor 1b and communicating with the outside. The sensor 1b is included in a worker position measuring apparatus that measures the positional information about the worker 100. It is assumed that a GNSS (Global Navigation Satellite System), a Beacon, or the like is used for the sensor 1b.

The work machines 200 include any type of machine that performs work such as a construction machine or a haulage vehicle that is active at a construction site. A hydraulic excavator 200a and a wheel loader 200b are illustrated as the work machines 200 in FIG. 1. The hydraulic excavator 200a includes the machine measuring apparatus 2 and the communication terminal 5. It is assumed in the present embodiment that the machine measuring apparatus 2 includes: a sensor 2b that measures the position and orientation of an upper swing structure 201a of the hydraulic excavator 200a; a sensor 2c that measures the posture of a front device 202a of the hydraulic excavator 200a; a sensor 2d that acquires the movable state of the hydraulic excavator 200a; and a data processing apparatus 2a for processing the information measured by the sensors 2b, 2c, and 2d and communicating with the outside. At least two GNSS antennas are used for the sensor 2b, and the sensor 2b is configured such that both the position and orientation can be computed. In addition, IMUs (Inertial Measurement Units), stroke sensors, and the like are used for the sensor 2c, and are included in links configuring the front device 202a. It is assumed that the sensor 2d is a lock lever sensor that electrically senses the ON/OFF state of a lock lever that locks machine body actions, but a sensor that senses the ON/OFF state of the engine or the engine revolution speed may be used as the sensor 2d.

The wheel loader 200b includes the machine measuring apparatus 2 and the communication terminal 5. It is assumed in the present embodiment that the machine measuring apparatus 2 includes: the sensor 2b that measures the position and orientation of the wheel loader 200b; the sensor 2d that acquires the movable state of the wheel loader 200b; and the data processing apparatus 2a for processing the information measured by the sensors 2b and 2d and communicating with the outside. At least two GNSS antennas are used for the sensor 2b, and the sensor 2b is configured such that both the position and orientation can be computed. It is assumed that the sensor 2d is a parking brake sensor that electrically senses the ON/OFF state of a parking brake that locks machine body actions, but a sensor that senses the ON/OFF state of the engine or the engine revolution speed may be used as the sensor 2d.

The communication facility 4 is a facility that enables connection, to the same network, of all types of controller and sensor in the construction site including the communication terminals 5 included in the worker 100 and the work machine 200, and includes an access point of a wireless LAN (Local Area Network) or the like. The management server 10 is a computer connected to the communication network of the communication facility 4. It is assumed in the present embodiment that the management server 10 is included in an office 300, and is connected with the display apparatus 3 provided to a personal computer or the like for accepting input from users or for display-outputting analysis results. Note that the management server 10 may be prepared as a virtual machine on a cloud computing system, and configured such that it can communicate with the cloud computing system through the network provided by the communication facility 4. It is assumed that the communication terminals 5 included in the worker 100 and the work machine 200 can be connected to the communication network provided by the communication facility 4, and can transmit measurement information to the management server 10 connected to the same network.

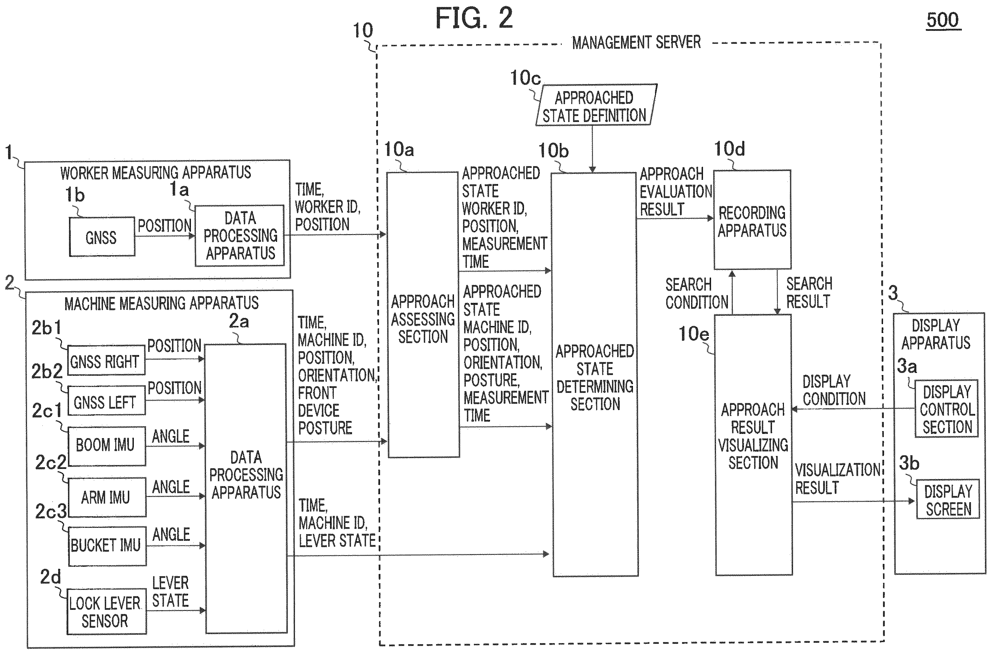

FIG. 2 is a functional block diagram depicting process functions of the work management system 500 according to the present embodiment. Functional blocks of the work management system 500 include the worker measuring apparatus 1, the machine measuring apparatus 2, the display apparatus 3, and the management server 10. Note that it is assumed in this description that the machine measuring apparatus 2 is mounted on the hydraulic excavator 200a.

The worker measuring apparatus 1 has the data processing apparatus 1a, and the GNSS 1b that measures the positional information about the worker 100. The GNSS 1b is included in the worker position measuring apparatus. The data processing apparatus 1a transmits, to the management server 10 via the communication terminal 5, the individual ID (Identification) and position of the worker 100 carrying the worker measuring apparatus 1, and a time at which measurement has been performed. The machine measuring apparatus 2 includes: the data processing apparatus 2a; a GNSS right 2b1 and a GNSS left 2b2 which are sensors for measuring the position and posture of the upper swing structure 201a of the hydraulic excavator 200a; a boom IMU 2c1, an arm IMU 2c2, and a bucket IMU 2c3 which are sensors for measuring the posture of the front device 202a of the hydraulic excavator 200a; and the lock lever sensor 2d. The GNSS right 2b1 and the GNSS left 2b2 are included in a work machine position measuring apparatus that measures the position of the work machine 200. The boom IMU 2c1, the arm IMU 2c2, the bucket IMU 2c3, and the lock lever sensor 2d are included in a state measuring apparatus that measures the state of the work machine 200. The data processing apparatus 2a transmits, to the management server 10 via the communication terminal 5 included in the work machine 200, information about the individual ID, position, orientation, front device posture, and lever state of the machine in which the data processing apparatus 2a is included, and times at which those pieces of information have been measured.

The management server 10 includes an approach assessing section 10a, an approached state determining section 10b, an approached state definition 10c, a recording apparatus 10d, and an approach result visualizing section 10e.

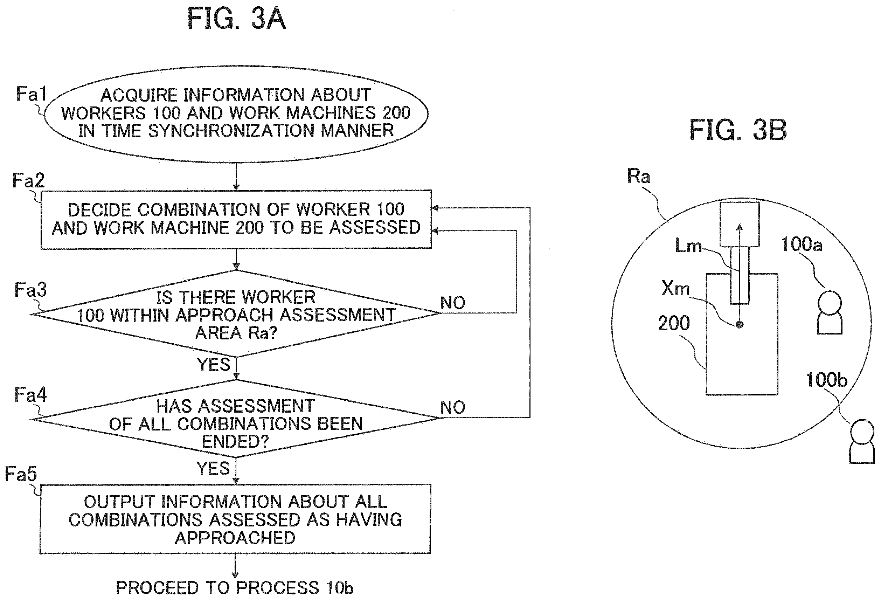

FIG. 3 is a figure depicting a processing procedure performed by the approach assessing section 10a in the present embodiment. An approach assessment process is performed along the procedure depicted in FIG. 3A. Here, an explanation is given by taking, as an example of the work machines 200, the hydraulic excavator 200a which makes the process relatively complicated. First, in a process Fa1, measurement information acquired from the worker measuring apparatuses 1 and the machine measuring apparatuses 2 is acquired in a time synchronization manner. Time synchronization means a process of grouping a plurality of pieces of measurement information such that measurement times outputted by the measuring apparatuses 1 and 2 are within a certain time range. Next, in a process Fa2, one combination of one selected worker 100 and one selected work machine 200 is decided from among a plurality of combinations of the workers 100 and the work machines 200 obtained.

Next, in a process Fa3, it is determined whether there is the worker 100 within a preset approach assessment area Ra. FIG. 3B represents a definition of the approach assessment area Ra in the present embodiment. The approach assessment area Ra is defined as a circle centered on a position Xm of the work machine 200. It is assumed that the radius of the circle increases and decreases depending on a front device length Lm computed from the posture of the front device 202a measured by the machine measuring apparatus 2, and it is assumed in the present embodiment that a length obtained by adding a certain margin to the front device length Lm is defined as the radius of the approach assessment area Ra. A state where a worker 100 is present inside the approach assessment area Ra is defined as an approached state, and a state where a worker 100 is present outside the approach assessment area Ra is defined as a non-approached state. For example, a worker 100a depicted in FIG. 3B is treated as being in an approached state, and a worker 100b depicted in FIG. 3B is treated as being in a non-approached state. Note that the method of expressing the approach assessment area Ra is not limited to the method described above, but an ellipse, a rectangle, or the like may be adopted.

Returning to FIG. 3A, if it is determined in the process Fa3 that the worker 100 is in an approached state, the procedure proceeds to a process Fa4. In contrast, if it is determined that the worker 100 is in a non-approached state, the procedure returns to the process Fa2, and an unprocessed combination of a worker 100 and a work machine 200 is decided. Next, in the process Fa4, it is determined whether the approach assessment process has been performed on all combinations. Where there is a remaining combination on which the approach assessment process has not been performed yet, the procedure returns to the process Fa2, and an unprocessed combination of a worker 100 and a work machine 200 is decided. In contrast, where the approach assessment process has been completed for all the combinations, the procedure proceeds to a process Fa5, information about all combinations that have been assessed as being in approached states is outputted to the approached state determining section 10b, and a process to be performed by the approached state determining section 10b is started.

Returning to FIG. 2, the approached state determining section 10b determines the approached state of the worker 100 and the work machine 200 that has been assessed as being in the approached state, on the basis of the predefined approached state definition 10c stored in the management server 10.

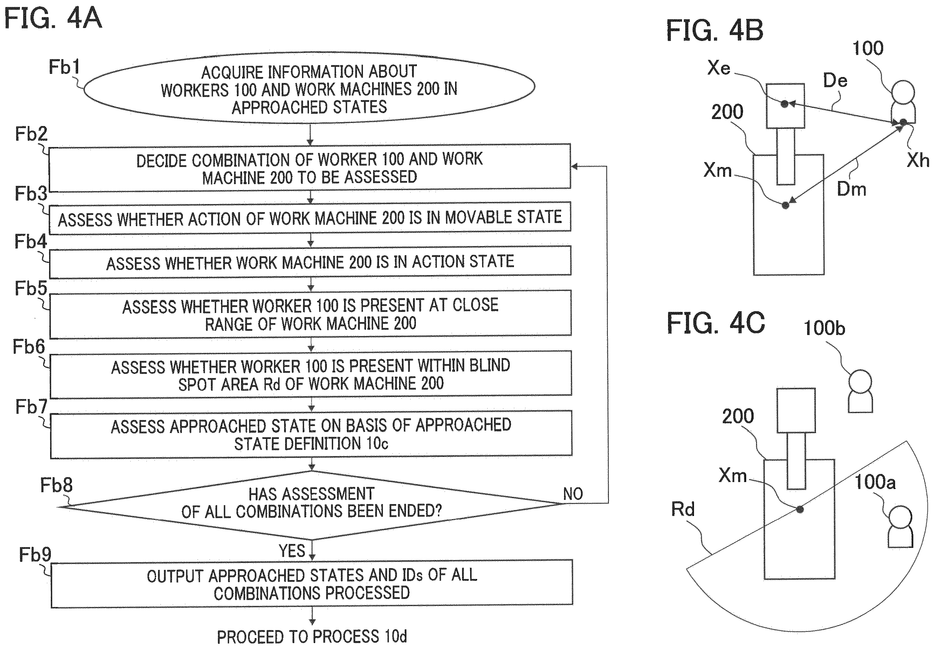

FIG. 4 is a figure depicting a processing procedure performed by the approached state determining section 10b in the present embodiment. The approached state determination process is performed along the procedure depicted in FIG. 4A. Here, an explanation is given by taking, as an example of the work machine 200, the hydraulic excavator 200a which makes the process relatively complicated. First, in a process Fb1, information about the workers 100 and the work machines 200 that have been determined as being in the approached states by the approach assessing section 10a is acquired. It is assumed that, at this time, the activation states of the corresponding work machines 200 also are acquired in a time synchronization manner from the machine measuring apparatuses 2. Next, in a process Fb2, one combination of one worker 100 and one work machine 200 is selected from among the plurality of combinations of the workers 100 and the work machines 200 obtained. Next, in a process Fb3, it is determined whether or not an action of the work machine 200 which has become the assessment target is in a movable state, on the basis of a lever state obtained from the machine measuring apparatus 2. A movable state is represented by the value of a binary flag representing whether or not the lever operation or autonomous actions of the work machine 200 is/are limited.

Next, in a process Fb4, it is determined whether the work machine 200 is in an action state. The assessment as to whether the work machine 200 is in an action state is implemented on the basis of: a velocity Vm determined by obtaining numerical differences of the position Xm of the work machine 200 over time; and a velocity Ve determined by obtaining numerical differences of a tip position Xe of the front device 202a computed on the basis of postural information about the front device 202a over time. Thresholds Vth1 and Vth2 preset for the velocities Vm and Ve are referred to, and a state where at least either Vth1 > |Vm| or Vth2 > |Ve| is satisfied is defined as an action state, and a state where none of Vth1 > |Vm| and Vth2 > |Ve| is satisfied is defined as a stopped state. Note that determination may be performed for each of the conditions about the magnitudes of the machine velocity Vm and the front device tip position velocity Ve, and the travelling state (travelling velocity) of the work machine 200, and the action state (each pivoting velocity of the plurality of joints that the front device 202a has) of the front device 202a may be defined separately.

Next, in a process Fb5, it is determined whether the worker 100 is present at a close range of the work machine 200. The assessment as to whether the worker 100 is at a close range is executed on the basis of the distances between the position Xm of the work machine 200 and the tip position Xe of the front device 202a, and a position Xh of the worker 100. As depicted in FIG. 4B, the distance between the machine position Xm and the worker position Xh is defined as Dm, and the distance between the front device tip position Xe and the worker position Xh is defined as De. Distance thresholds Dth1 and Dth2 are defined in advance for the distances Dm and De, respectively. A state where either Dth1 > Dm or Dth2 > De is satisfied is defined as a short distance state, a state where none of Dth1 > Dm and Dth2 > De is satisfied is defined as a non-short distance state.

Next, in a process Fb6, it is determined whether the worker 100 is present within a blind spot area Rd of the work machine 200. The blind spot area Rd is defined as a sector which is a part of a circle centered on the position Xm of the work machine 200. It is assumed that, similarly to the approach assessment area Ra, the radius of the sector increases and decreases depending on the front device length Lm computed from the posture of the front device 202a measured by the machine measuring apparatus 2. It is assumed that the range of the sector is preset to an angle range that is predicted to be difficult for an operator at the operator's seat of the work machine 200 to see. In the example depicted in FIG. 4C, areas on the back of the work machine 200 and the right side of the work machine 200 that are difficult for the operator to see are defined as the blind spot area Rd. A state where a worker 100 is present inside the approach assessment area Rd is defined as a blind spot state, and a state where a worker 100 is present outside the approach assessment area Rd is defined as a non-blind spot state. For example, the worker 100a depicted in FIG. 4C is treated as being in a blind spot state, and the worker 100b depicted in FIG. 4C is treated as being in a non-blind spot state. Note that the method of expressing the approach assessment area Rd is not limited to the method described above, but an ellipse, a rectangle, or the like may be adopted.

Returning to FIG. 3A, in a process Fb7, a final approached state is determined on the basis of the approached state definition 10c defined in advance on the basis of the locking state determined in the process Fb3, the action state determined in the process Fb4, the distance state determined in the process Fb5, and the blind spot state determined in the process Fb6.

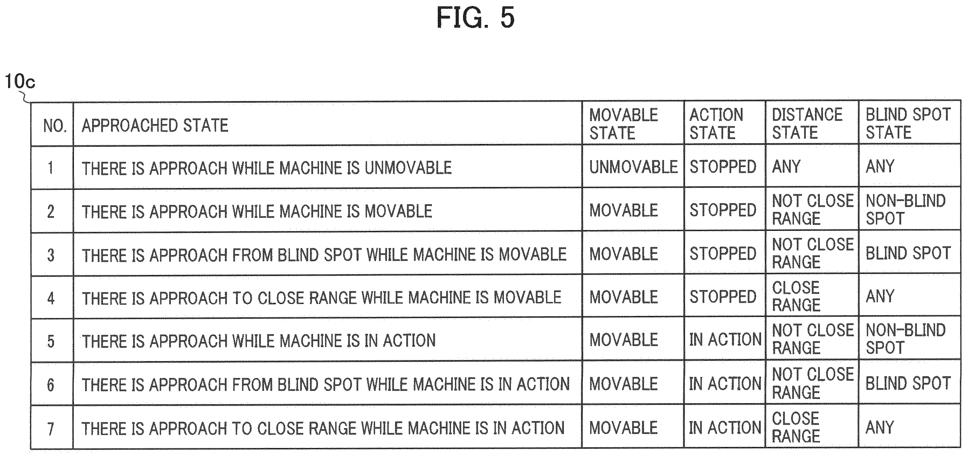

FIG. 5 is a diagram depicting an example of the approached state definition 10c in the present embodiment. It is assumed that an approached state is decided by a combination of four states which are a movable state, an action state, a distance state, and a blind spot state each of which is given as the value of a binary flag. In the present embodiment, seven states depicted in FIG. 5 are defined as approached states. Note that it is assumed that approached states are not limited to the content depicted in FIG. 5, but necessary states can be defined in advance according to the states of the worker 100 and the work machine 200 to be acquired.

Returning to FIG. 4A, after the approached state is decided in the process Fb7, it is assessed in a process Fb8 whether or not approached states of all the combinations have been decided. Where there are remaining combinations on which the approached state determination process has not been performed yet, the procedure returns to the process Fb2, and an unprocessed combination of a worker 100 and a work machine 200 is decided. In contrast, where the approached state determination process has been completed for all the combinations, the procedure proceeds to a process Fb9, and information about all the combinations whose approached states have been decided, and the IDs of the workers 100 and the work machines 200 that have been involved in approach in the respective approached states are outputted to and stored in the recording apparatus 10d such as a memory.

Returning to FIG. 2, the recording apparatus 10d records an approach evaluation result outputted by the approached state determining section 10b. It is assumed that the approach evaluation result is a result generated by putting together the information about times of occurrence of approach, approached state, and the ID, position, orientation, and posture of the respective involved worker 100 and work machine 200. In addition, the recording apparatus 10d receives input of search conditions for extracting data desired by the approach result visualizing section mentioned later. It is assumed that a time range, an approached state, the ID of the worker 100 or the work machine 200, and the like to be displayed can be selected as the search conditions. Relevant result is extracted from an approach evaluation result group recorded on the recording apparatus 10d in accordance with those search conditions, and the search result is outputted to the approach result visualizing section 10e.

The approach result visualizing section 10e generates search conditions for extracting necessary data in accordance with display conditions inputted from a display control section 3a included in the display apparatus 3, and outputs the search conditions to the recording apparatus 10d. In addition, the approach result visualizing section 10e visualizes the search results outputted from the recording apparatus 10d by a chart, a map, or the like in such a format that each occurrence of approach that has occurred and an approached state at that time can be grasped clearly, on the basis of the results. The visualized results are outputted to a display screen 3b such as a monitor included in the display apparatus 3.

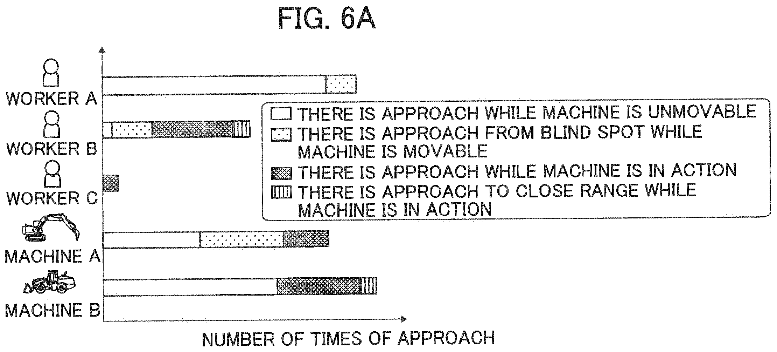

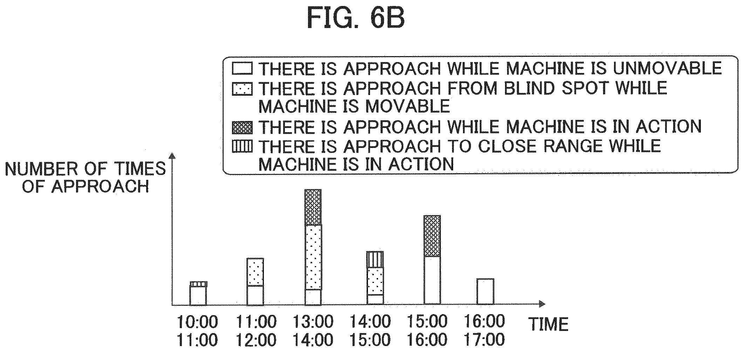

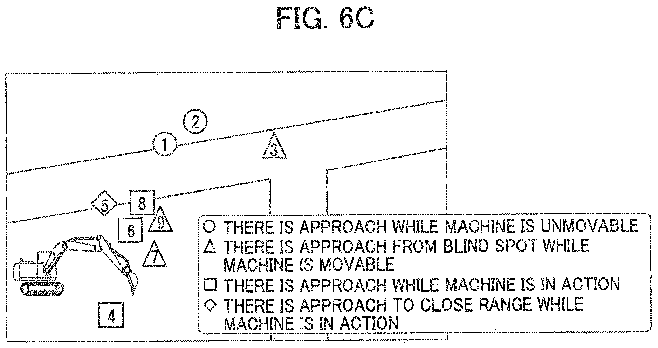

FIG. 6 is a diagram depicting examples of an approach result outputted by the approach result visualizing section 10e in the present embodiment. FIG. 6A depicts an example of visualization of an approach result as a labelled bar chart having approached states as labels where the horizontal axis represents the number of times of approach, and the vertical axis represents the workers 100 and the work machines 200 involved in the approach. If an approach result is visualized in a format as in FIG. 6A, it is clearly expressed which workers 100 or work machines 200 have been involved in approach, and how inappropriate the approach has been. FIG. 6B depicts an example of visualization of an approach result as a labelled bar chart having approached states as labels where the horizontal axis represents times of occurrence, and the vertical axis represents the number of times of approach. If an approach result is visualized in a format as in FIG. 6B, it is clearly expressed when an inappropriate approach has occurred, and how inappropriate the approach has been. FIG. 6C depicts an example of visualization of an approach result by labelling each occurrence of approach, and plotting the approach occurrence position on a map. If an approach result is visualized in a format as in FIG. 6C, it is clearly expressed where a lot of inappropriate approach have occurred, and how inappropriate the approach has been. Note that the three examples depicted in FIG. 6 are examples of the visualization method, and it is also assumed that other display forms in which approached states are associated with respective occurrences of approach are used.

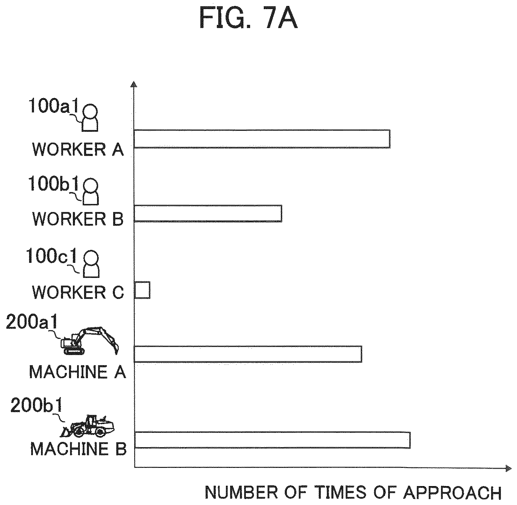

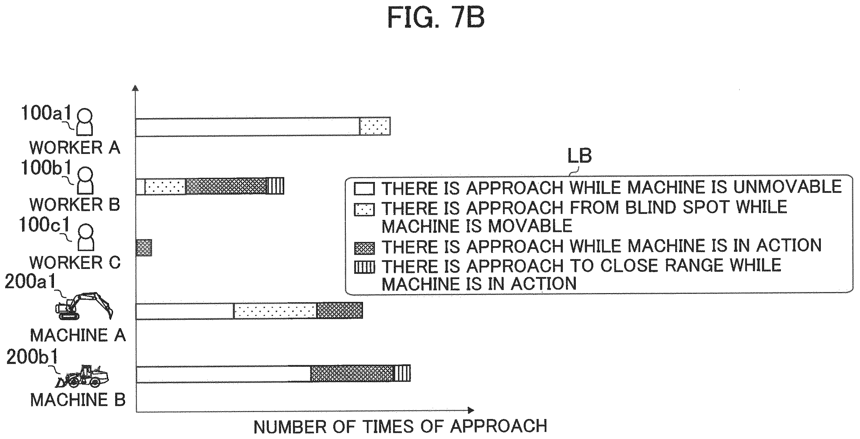

FIG. 7 is a figure depicting advantages of the present invention according to the present embodiment. FIG. 7A depicts a result in which the number of times of approach of the workers 100 and the number of times of approach of the work machines 200 involved in the approach are displayed without being associated with approached states. It can be seen in the display format in FIG. 7A that a worker A100a1 and a worker B100b1 whose numbers of times of approach are great can be the target of safety education. However, since it cannot be determined what type of approach each worker 100 has been involved in, it is difficult for the manager side to present the specific direction of behavior correction.

FIG. 7B depicts results in which the number of times of approach of the workers 100 and the number of times of approach of the work machines 200 involved in the approach are displayed in a labelled bar chart in association with details LB of approached states. The display format in FIG. 7B clearly expresses the details LB of the approached state of the approach that each worker has been involved in. Accordingly, since it can be known that approach of the worker A100a1 who tends to be determined as being likely to contact a work machine 200 in terms of the number of times of approach is, in most cases, approach that occurs while machines are unmovable, and is relatively unlikely to result in contact, the priority of the worker A100a1 as the target of safety education lowers relatively. On the other hand, approach of the worker B100b1 is, in most cases, approach that is likely to result in contact such as approach to a work machine 200 in a movable state, approach from a blind spot, or approach to a work machine 200 while it is in action. Accordingly, it can be determined that the priority of the worker B100b1 as the target of safety education is higher than that of the worker A100a1 whose number of times of approach is greater. Furthermore, by collating details LB of approached states with approach results of each of the worker 100 and the work machine 200, it becomes easier for the manager to present the specific direction of behavior correction. For example, since the worker B100b1 often approaches a work machine while it is in action, it can be determined that it is necessary to improve the awareness of the worker B100b1 such that she/he becomes careful of approach to a work machine while it is in action, particularly.

### (Summary)

In the present embodiment, the work management system 500 including the management server 10, and the display apparatus 3 that displays information outputted from the management server 10 includes: the work machine position measuring apparatuses 2b1 and 2b2 that measure positional information about a work machine 200; the work machine state measuring apparatuses 2c1, 2c2, 2c3, and 2d that measure states of the work machine 200; and the worker position measuring apparatus 1b that measures positional information about a worker 100 who performs work near the work machine 200. In the work management system 500, the management server 10 assesses approach between the work machine 200 and the worker 100 on the basis of the positional information about the work machine 200 measured by the work machine position measuring apparatuses 2b1 and 2b2, and the positional information about the worker 100 measured by the worker position measuring apparatus 1b, and when it is assessed that there is approach, assesses an approached state of the approach from the states of the work machine 200 measured by the work machine state measuring apparatuses 2c1, 2c2, 2c3, and 2d at the time of the assessment of the approach on the basis of the preset approached state definition 10c, records the states of the work machine 200 measured at the time of the assessment of the approach in association with the approached state, and outputs the states to the display apparatus 3 in association with the approached state.

According to the thus-configured present embodiment, a result of assessment regarding the approach between the work machine 200 and the worker 100 is displayed in association with the approached state taking into consideration the states of the work machine 200 at the time of the approach assessment. Accordingly, it becomes possible to efficiently extract approach events that are likely to result in contact between the work machine 200 and the worker 100. As a result, the effectiveness and efficiency of risk assessment and safety education by the manager are enhanced significantly.

In addition, the work machine state measuring apparatus 2d in the present embodiment measures a movable state of the work machine 200. Thus, it becomes possible to assess the approached state taking into consideration the movable state of the work machine 200.

In addition, the work machine 200 in the present embodiment has the front device 202a having the plurality of joints, and the work machine state measuring apparatuses 2c1, 2c2, and 2c3 measure the respective angles of the plurality of joints. Thus, it becomes possible to assess the approached state taking into consideration the posture of the front device 202a.

In addition, the work machine state measuring apparatuses 2b1, 2b2, 2c1, 2c3, and 2d measure the travelling velocity of the work machine 200, and the respective pivoting velocities of the plurality of joints that the front device 202a has. Thus, it becomes possible to assess the approached state taking into consideration the travelling velocity of the work machine 200 and the action velocity of the front device 202a.

In addition, the approached state definition 10c includes a state where the worker 100 approaches the work machine 200 in a movable state from a blind spot. Thus, it becomes possible to assess a worker 100 whose priority as the target of safety education is high.

Note that although the worker measuring apparatus 1, the management server 10, and the display apparatus 3 are explained as apparatuses independent from the work machines 200 in the present embodiment, these may be mounted on the work machine 200. Advantages similar to those of the present embodiment are achieved with the thus-configured work machine 200 also.

### Second Embodiment

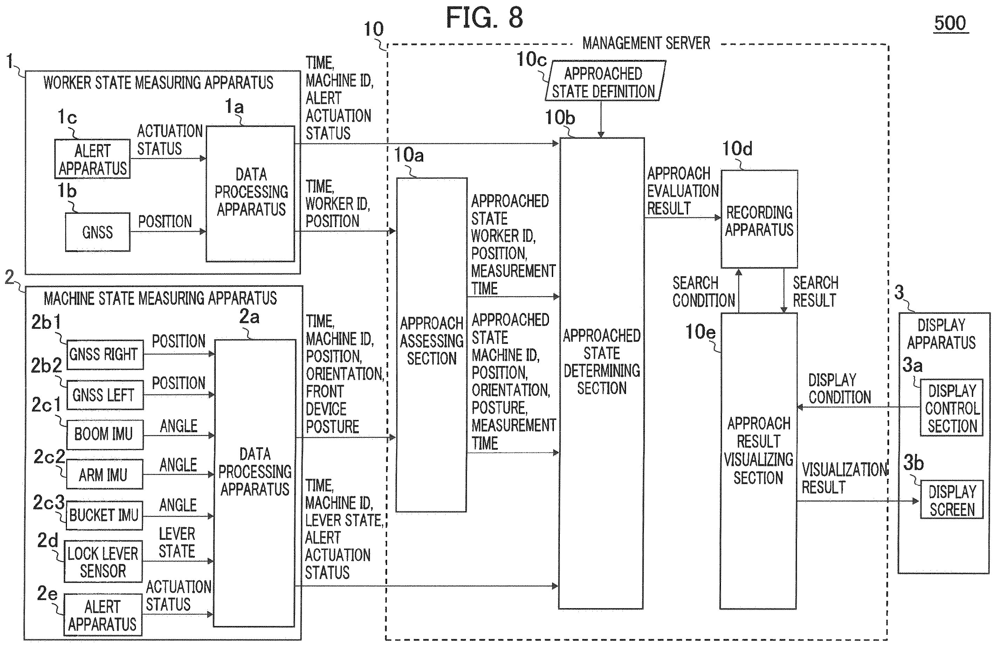

FIG. 8 is a functional block diagram depicting process functions of the work management system 500 according to a second embodiment of the present invention. The worker measuring apparatus 1 includes, as an avoiding apparatus on a worker side, an alert apparatus 1c such as a buzzer that prompts to avoid contact with a work machine 200. The data processing apparatus 1a outputs, to the approached state determining section 10b, a time at which the alert apparatus 1c is actuated, the ID of a worker who owns the worker measuring apparatus 1, and an actuation status of the alert apparatus 1c. Here, the avoiding apparatus carried by the worker 100 is not limited to the alert apparatus 1c, but may include a radio or the like for communicating with an operator of a work machine 200.

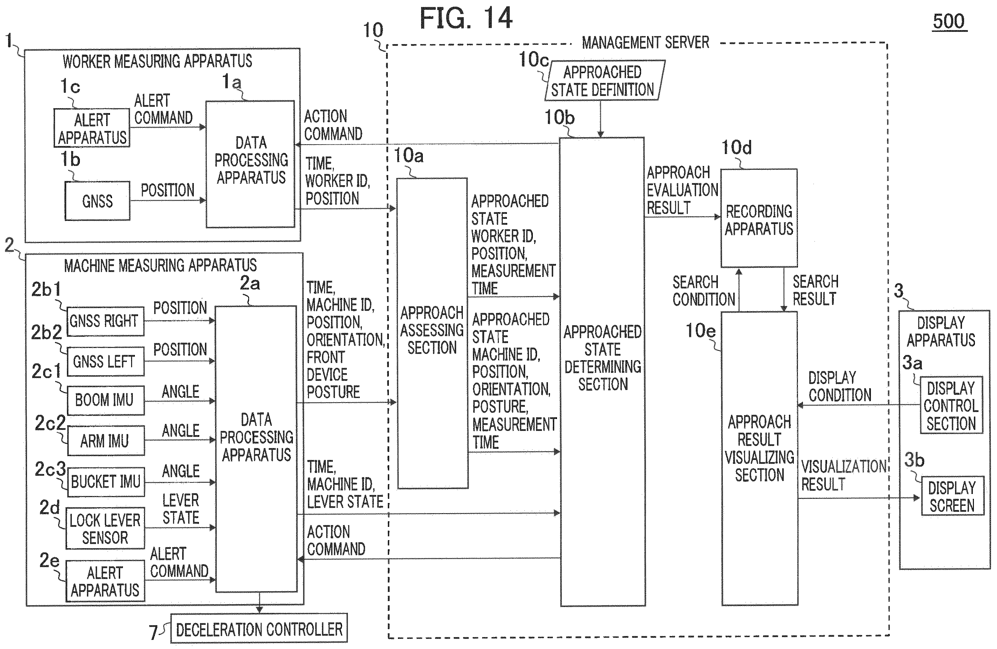

The machine measuring apparatus 2 includes, as an avoiding apparatus on a machine side, an alert apparatus 2e such as a buzzer. The data processing apparatus 2a outputs, to the approached state determining section 10b, a time at which the alert apparatus 2e is actuated, the ID of a machine on which the machine measuring apparatus 2 is mounted, and an actuation status of the avoiding apparatus. Here, the avoiding apparatus mounted on the work machine 200 is not limited to the alert apparatus 2e, but may include a deceleration controller 7 (depicted in FIG. 14) like one that automatically decelerates and stops actions of the work machine 200, or the like.

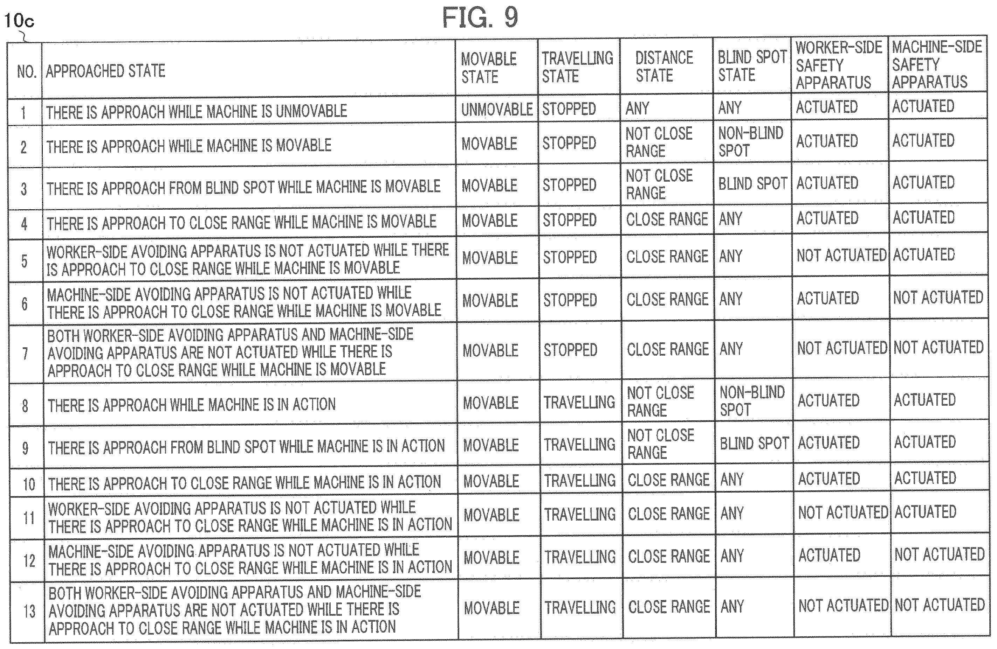

FIG. 9 is a diagram depicting an example of the approached state definition 10c in the present embodiment. The approached state definition 10c takes into consideration a binary flag representing an actuation status of the avoiding apparatus on the worker side such as the alert apparatus 1c carried by the worker 100, and a binary flag representing an actuation status of the avoiding apparatus on the machine side such as the alert apparatus 2e mounted on the work machine 200. It is possible to interpret from the table of the approached state definition 10c that the likelihood of contact has been high when both the avoiding apparatus on the worker side and the avoiding apparatus on the machine side have not been in action.

### (Summary)

The work management system 500 according to the present embodiment includes the avoiding apparatuses 1c and 2e that cause the work machine 200 and the worker 100 to avoid contact, and the management server 10 assesses the approached state of the work machine 200 and the worker 100 from the state of the work machine 200 measured at the time of the assessment of the approach between the work machine 200 and the worker 100, and the actuation statuses of the avoiding apparatuses 1c, 2e, and 7 at the time of the assessment of the approach, on the basis of the preset approached state definition 10c. In addition, the avoiding apparatuses 1c, 2e, and 7 in the present embodiment include the alert apparatuses 1c and 2e that issue alerts to an operator of the work machine 200 or the worker 100, or include the deceleration controller 7 that decelerates or stops the work machine 200.

According to the thus-configured present embodiment, by assessing the approached state taking into consideration the actuation statuses of the avoiding apparatuses 1c, 2e, and 7, it becomes possible for the manager to more accurately and detailedly grasp the likelihood of contact at the time of occurrence of approach.

### Third Embodiment

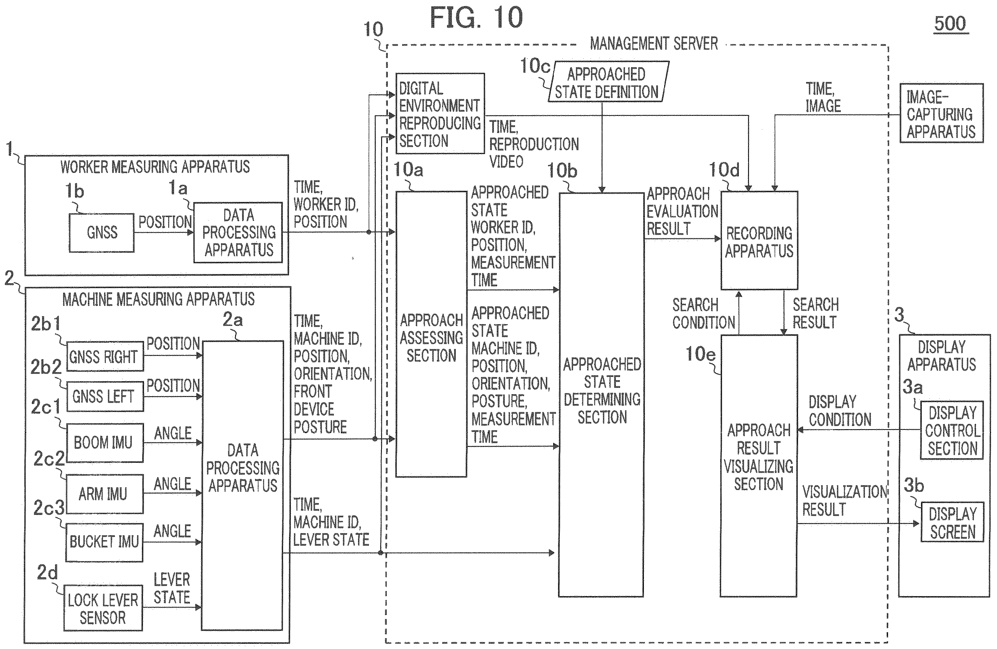

FIG. 10 is a functional block diagram depicting process functions of the work management system 500 according to a third embodiment. The work management system 500 includes an image-capturing apparatus 6 such as a camera that captures images of the state of work performed by the worker 100 and the work machine 200. The image-capturing apparatus 6 outputs times at which the images have been captured and the captured images to the recording apparatus 10d. In the present embodiment, the image-capturing apparatus 6 is fixed to a pole, a building, or the like installed in the site, and is configured to be able to transmit information to the management server 10 via the network provided by the communication facility 4. Note that the installation method of the image-capturing apparatus 6 is not limited to the mode according to the present embodiment, but the image-capturing apparatus 6 may be installed at a helmet or the like worn by the worker 100 or on the exterior of the work machine 200. In addition, the number of image-capturing apparatuses 6 is not limited to one, but a plurality of image-capturing apparatuses 6 may be installed in the site, and the respective image-capturing apparatuses 6 may be connected to the network provided by the communication facility 4.

In addition, the management server 10 includes a digital environment reproducing section 10f that reproduces actions of the worker 100 and the work machine 200 measured with the worker measuring apparatus 1 and the machine measuring apparatus 2 by using Computer Graphics (CG) or the like in a digital environment. The digital environment reproducing section 10f outputs, to the recording apparatus 10d and in a format corresponding to times, a reproduction video visualizing the actions of the worker 100 and the work machine 200 that are reproduced in the digital environment.

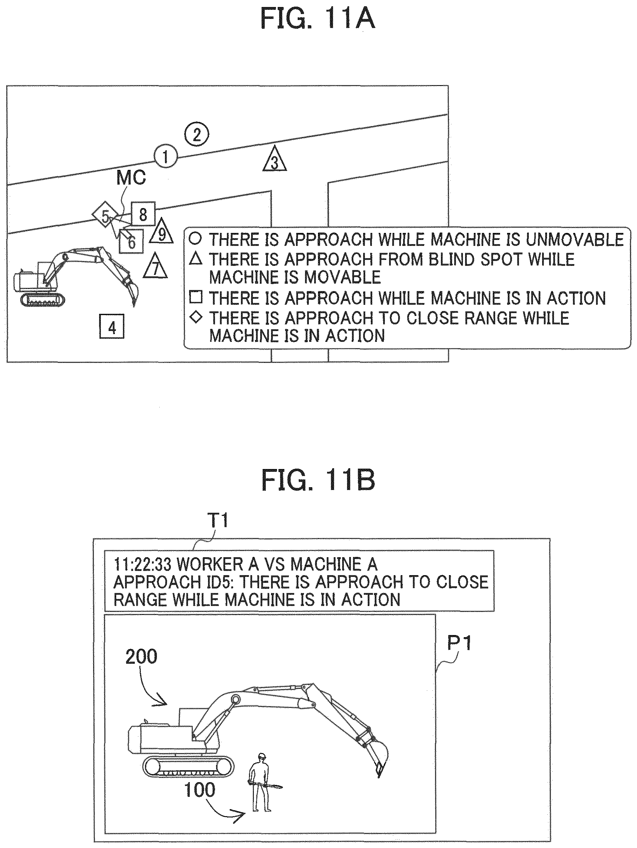

FIG. 11 is a diagram depicting examples of approach results outputted by the approach result visualizing section 10e in the present embodiment. FIG. 11A depicts an example of each approach occurrence portion labelled and plotted on a map, and selection of particular approach selected via the display control section 3a of the display apparatus 3. In the present embodiment, a user selects particular approach (ID: 5) via a mouse cursor MC. Since results in which approached states are labeled are provided to the user, it is possible for the user to efficiently select approach that is particularly likely to result in contact, and whose necessity for implementation of risk assessment is high.

FIG. 11B depicts an example of a method of displaying detail information about the selected approach. In the example depicted in FIG. 11B, the time of occurrence of the selected approach, the respective IDs of the worker 100 and the work machine 200 involved, and an approached state are displayed with a text T1. Furthermore, an image P1 captured with the image-capturing apparatus 6 at the time of occurrence of the selected approach is displayed. Note that images at the plurality of times before and after the time of occurrence of the approach may be displayed as one video. In addition, instead of the image P1 captured with the image-capturing apparatus 6, an image taken out from a reproduction video generated by the digital environment reproducing section 10f may be displayed. By checking such display results of detail information, the manager can grasp detailedly a situation at the time of occurrence of approach that is likely to result in contact, and can use the detail information for risk assessment or safety education.

### (Summary)

The work management system 500 according to the present embodiment includes the image-capturing apparatus 6 that captures an image of the work machine 200 and the worker 100, and, when it is assessed that there is the approach between the work machine 200 and the worker 100, the management server 10 records, in association with the approached state, the image of the work machine 200 and the worker 100 captured with the image-capturing apparatus 6 at the time of the assessment of the approach, and outputs the image to the display apparatus 3.

Alternatively, when it is assessed that there is the approach between the work machine 200 and the worker 100, the management server 10 in the present embodiment creates a reproduction video visualizing actions of the work machine 200 and the worker 100 on the basis of the positional information about the work machine 200, the positional information about the worker 100, and the state of the work machine 200 measured at the time of the assessment of the approach, records the reproduction video in association with the approached state, and outputs the reproduction video to the display apparatus 3.

According to the thus-configured present embodiment, by displaying the image of the work machine 200 and the worker 100 along with the approached state, it becomes possible for the manager to grasp, efficiently and detailedly, a situation at the time of occurrence of the approach that is likely to result in contact.

### Fourth Embodiment

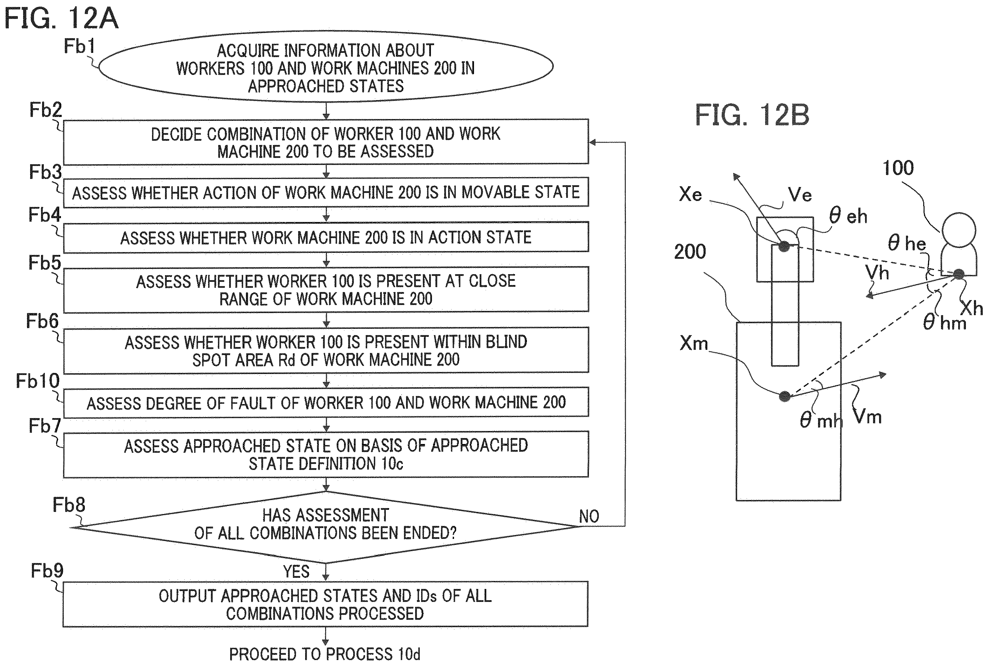

FIG. 12 is a figure depicting a processing procedure performed by the approached state determining section 10b according to a fourth embodiment. The processing procedure performed by the approached state determining section 10b depicted in FIG. 12A has a process Fb10 of assessing the degree of fault of the worker 100 and the degree of fault of the work machine 200 regarding approach that has occurred. The process Fb10 is implemented on the basis of three types of velocity information which are a velocity Vh determined by obtaining numerical differences of the position Xh acquired from the worker measuring apparatus 1 over time, the velocity Vm determined by obtaining numerical differences of the position Xm acquired from the machine measuring apparatus 2 over time, and the velocity Ve determined by obtaining numerical differences of the tip position Xe of the front device 202a computed on the basis of postural information acquired from the machine measuring apparatus 2 over time. Note that the determination of the degree of fault is not limited to a technique using velocity information, but the degree of fault may be decided according to the actuation status of the avoiding apparatus or approached state.

FIG. 12B depicts a definition of each state quantity used for the determination of the degree of fault. For the assessment of the degree of fault of the worker 100, angles θhm and θhe formed by the worker velocity Vh and two straight lines passing through the worker position Xh, and the machine position Xm and front device tip position Xe are used. A threshold Vth3 for the worker velocity Vh and thresholds θth1 and θth2 for the formed angles θhm and θhe are defined in advance. Where either |Vh| > Vth3 and |θhm| < θth1 or |Vh| > Vth3 and |θhe| < θth2 is satisfied, there is a possibility that the worker 100 is approaching the work machine 200. Accordingly, it is determined that there is a fault of the worker 100 regarding an occurrence of approach.

For the assessment of the degree of fault of the work machine 200, angles θmh and θeh formed by the two straight lines passing through the machine position Xm and front device tip position Xe, and the worker position Xh, and the machine velocity Vm and front device tip position velocity Ve, respectively, are used. Thresholds Vth4 and Vth5 for the machine velocity Vm and the front device tip position velocity Ve, and thresholds θth3 and θth4 for the angles θmh and θeh are defined in advance. Where either |Vm| > Vth4 and |θmh| < θth3 or |Ve| < Vth4 and |θeh| > θth4 is satisfied, there is a possibility that the work machine 200 is approaching the worker 100. Accordingly, it is determined that there is a fault of the work machine 200 regarding an occurrence of approach. Note that although, in the present embodiment, the degree of fault is determined in a dichotomous manner in such a way as to determine whether or not there is a fault, it may be determined in a consecutive manner according to the velocity or the magnitude of formed angle.

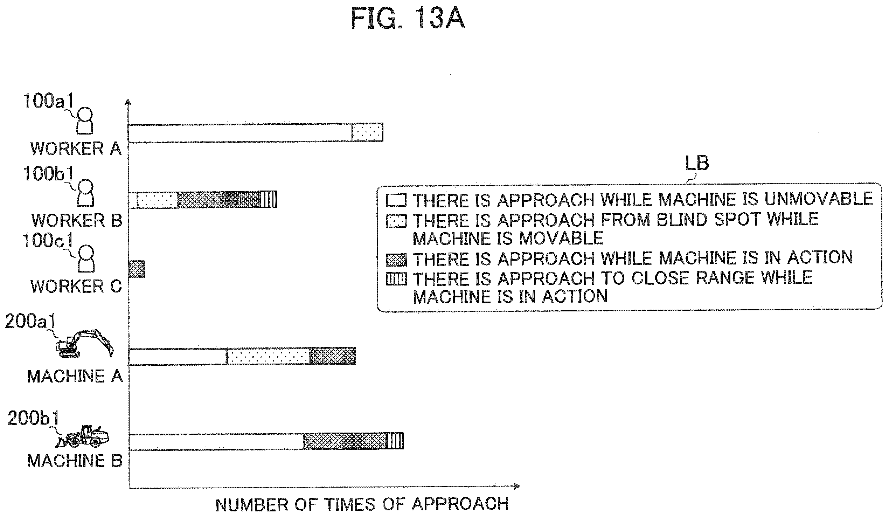

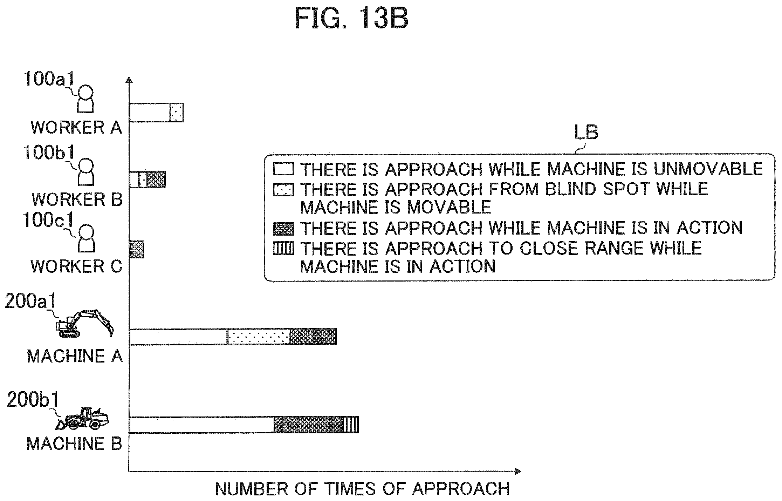

FIG. 13 is a figure depicting examples of an expression method of the degree of fault and advantages of the present invention in the fourth embodiment. FIG. 13A depicts an example in which the number of times of approach is displayed on a bar chart not reflecting the degree of fault. In the chart depicted in FIG. 13A, when approach has occurred, the number of times of approach of a worker 100 and the number of times of approach of a work machine 200 involved in the approach are incremented. Accordingly, a worker 100 or a work machine 200 that is involved in approach without fault is undesirably evaluated so as to have a larger number of times of approach despite the less fault.

FIG. 13B depicts an example in which the number of times of approach is displayed on a bar chart reflecting the degree of fault. In the chart in FIG. 13B, when approach has occurred, the number of times of approach of only a worker 100 or a work machine 200 that is determined as being involved in approach with fault is incremented. Accordingly, a worker 100 or a work machine 200 that is involved in approach without fault is evaluated as having a small number of times of approach. The example in FIG. 13B depicts a result in a case where the number of occurrences of approach with fault is small on the worker 100 side, and the number of occurrences of approach with fault is great on the side of the work machine 200. Since the result of degree of fault is reflected, such a result that the number of times of approach of the worker 100 is relatively small, and the number of times of approach of the work machine 200 is relatively great is displayed. As a result, the manager can determine to raise the priority, regarding safety education, of an operator of the work machine 200 who has high degree of fault.

### (Summary)

The management server 10 in the present embodiment, when assessing that there is approach between the work machine 200 and the worker 100, calculates the degree of fault of an operator of the work machine 200 and the degree of fault of the worker 100 regarding an occurrence of the approach on the basis of the measurement information of the work machine position measuring apparatuses 2b1 and 2b2, the worker position measuring apparatus 1b, and the work machine state measuring apparatuses 2c1, 2c2, 2c3, and 2d at the time of the assessment of the approach, records the degree of fault in association with the approached state of the work machine 200 and the worker 100, and outputs the degree of fault to the display apparatus 3.

According to the thus-configured present embodiment, it becomes possible for the manager to efficiently and accurately grasp a worker 100 or an operator of a work machine 200 whose priority of education is high, by displaying the degree of fault of the operator of the work machines 200 and the degree of fault of the worker 100 regarding occurrence of approach in association with approached state.

### Fifth Embodiment

FIG. 14 is a functional block diagram depicting process functions of the work management system 500 according to a fifth embodiment of the present invention. The work management system 500 according to the present embodiment includes the alert apparatus 1c carried by the worker 100 and the alert apparatus 2e mounted on the work machine 200, similarly to the second embodiment. Furthermore, the work management system 500 according to the present embodiment includes the deceleration controller 7 that automatically decelerates or stops actions of the work machine 200. The alert apparatuses 1c and 2e and the deceleration controller 7 are configured to be able to receive action commands from the management server 10 via the network provided by the communication facility 4. In a case where the work machine 200 is the hydraulic excavator 200a, valves and the like that interrupt or restrict a hydraulic fluid supplied to hydraulic actuators such as hydraulic cylinders or a hydraulic motor are included in the deceleration controller 7. In a case where the work machine is the wheel loader 200b, a brake and the like are included in the deceleration controller 7, in addition to the valves mentioned before.

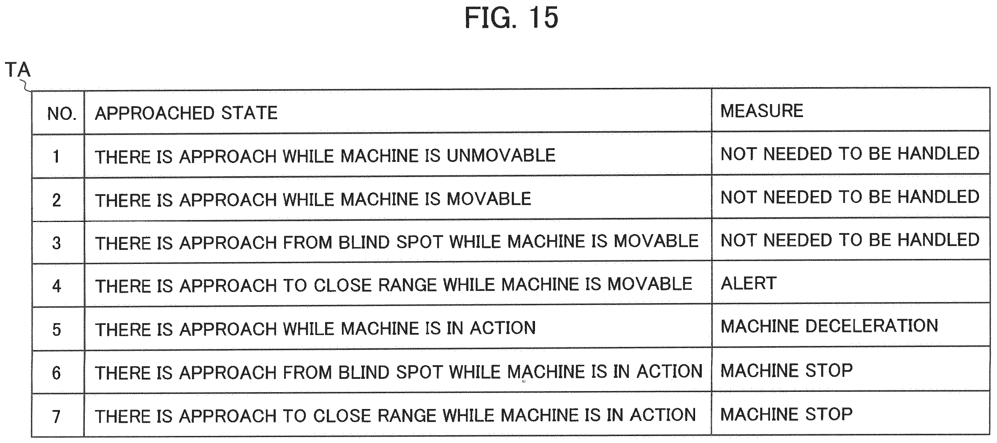

FIG. 15 is a diagram depicting an example of measures to be taken regarding the approached states 10c in the present embodiment. By defining a correspondence table TA of approached states and measures like those depicted in FIG. 15 in advance, a user can optionally set measures to be taken depending on the approached states as desired. In the present embodiment, three ways which are alerts by the alert apparatuses 1c and 2e, deceleration control of the work machine 200 by the deceleration controller 7 of the work machine 200, and stop control of the work machine 200 by the deceleration controller 7 of the work machine 200 are prepared. This is useful for operational use of a system in which measures with higher effect of direct-contact avoidance are taken as alert levels increase.

### (Summary)

The work management system 500 in the present embodiment includes the avoiding apparatuses 1c, 2e, and 7 that cause the work machine 200 and the worker 100 to avoid contact, and the management server 10 outputs, to the avoiding apparatuses 1c, 2e, and 7, commands according to the approached state of the work machine 200 and the worker 100.

According to the thus-configured present embodiment, it becomes possible to appropriately correct inappropriate behavior of the worker 100 or an operator of the work machine 200 in the site by actuating the avoiding apparatuses 1c, 2e, and 7 without excess or inadequacy according to approached states of the work machine 200 and the worker 100.

Although embodiments of the present invention have been described in detail thus far, the present invention is not limited to the embodiments described above, but includes various modification examples. For example, the embodiments described above are explained in detail for explaining the present invention in an easy-to-understand manner, and are not necessarily limited to those including all the constituent elements explained. In addition, it is also possible to add some of the constituent elements of an embodiment to the constituent elements of another embodiment, and it is also possible to remove some of the constituent elements of an embodiment or to replace some of the constituent elements of an embodiment with some of the constituent elements of another embodiment.

### Description of Reference Characters

1: Worker measuring apparatus
1a: Data processing apparatus
1b: GNSS (worker position measuring apparatus)
1c: Alert apparatus (avoiding apparatus)
2: Machine measuring apparatus
2a: Data processing apparatus
2b1: GNSS right (work machine position measuring apparatus)
2b2: GNSS left (work machine position measuring apparatus)
2c1: Boom IMU (work machine state measuring apparatus)
2c2: Arm IMU (work machine state measuring apparatus)
2c3: Bucket IMU (work machine state measuring apparatus)
2d: Sensor (work machine state measuring apparatus)
2e: Alert apparatus (avoiding apparatus)
3: Display apparatus
3a: Display control section
3b: Display screen
5: Communication terminal
6: Image-capturing apparatus
7: Deceleration controller (avoiding apparatus)
10: Management server
10a: Approach assessing section
10b: Approached state determining section
10c: Approached state definition
10d: Recording apparatus
10e: Approach result visualizing section
10f: Digital environment reproducing section
100, 100a, 100b: Worker
100a1: Worker A
100b1: Worker B
200: Work machine
200a: Hydraulic excavator
200b: Wheel loader
201a: Upper swing structure
202a: Front device
300: Office
500: Work management system

## Claims

1. A work management system comprising:
a management server (10); and
a display apparatus (3) that displays information outputted from the management server (10), wherein
the management server (10) is configured to
assess whether or not there is approach between a work machine (200) and a worker (100) who performs work near the work machine (200), on a basis of positional information about the work machine (200) measured by a work machine position measuring apparatus (2b1, 2b2) that measures the positional information about the work machine (200), and positional information about the worker (100) measured by a worker position measuring apparatus (1b) that measures the positional information about the worker (100), and,
when assessing that there is approach, assess an approached state of the approach from a state of the work machine (200) measured by a work machine state measuring apparatus (2c1, 2c2, 2c3, 2d) that measures the state of the work machine (200) at a time of the assessment of the approach, on a basis of a preset approached state definition (10c), and **characterised in that** it is configured to
record the state of the work machine (200) measured at the time of the assessment of the approach, in association with the approached state, and output the state of the work machine (200) to the display apparatus (3) in association with the approached state.

2. The work management system according to claim 1, wherein
the work machine state measuring apparatus (2d) measures a movable state of the work machine (200).

3. The work management system according to claim 1, wherein
the work machine (200) has a front device (202a) having a plurality of joints, and
the work machine state measuring apparatus (2c1, 2c2, 2c3) measures each angle of the plurality of joints.

4. The work management system according to claim 1, wherein
the work machine (200) has a front device (202a) having a plurality of joints, and
the work machine state measuring apparatus (2c1, 2c2, 2c3, 2d) measures a travelling velocity of the work machine (200), and each pivoting velocity of the plurality of joints.

5. The work management system according to claim 1, wherein
the work management system includes an avoiding apparatus (1c; 2e; 7) that causes the work machine (200) and the worker (100) to avoid contact therebetween, and
the management server (10) is configured to assess the approached state from the state of the work machine (200) measured at the time of the assessment of the approach, and an actuation status of the avoiding apparatus (1c; 2e; 7) at the time of the assessment of the approach, on the basis of the approached state definition (10c).

6. The work management system according to claim 5, wherein
the avoiding apparatus (1c; 2e) includes an alert apparatus that issues an alert to an operator of the work machine (200) or the worker (100) or a deceleration controller that decelerates or stops the work machine (200).

7. The work management system according to claim 1, wherein
the work management system includes an image-capturing apparatus (6) that captures an image of the work machine (200) and the worker (100), and
the management server (10) is configured to, when assessing that there is the approach, record an image of the work machine (200) and the worker (100) captured with the image-capturing apparatus (6) at the time of the assessment of the approach, in association with the approached state, and output the image to the display apparatus (3).

8. The work management system according to claim 1, wherein
the management server (10) is configured to, when assessing that there is the approach, create a reproduction video that visualizes actions of the work machine (200) and the worker (100) on a basis of the positional information about the work machine (200), the positional information about the worker (100), and the state of the work machine (200) that are measured at the time of the assessment of the approach, record the reproduction video in association with the approached state, and output the reproduction video to the display apparatus (3).

9. The work management system according to claim 1, wherein
the management server (10) is configured to, when assessing that there is the approach, calculate a degree of fault of an operator of the work machine (200) and a degree of fault of the worker (100) regarding an occurrence of the approach on a basis of measurement information of the work machine position measuring apparatus (2b1, 2b2), the worker position measuring apparatus (1b), and the work machine state measuring apparatus (2c1, 2c2, 2c3, 2d) at the time of the assessment of the approach, record the degrees of fault in association with the approached state, and output the degrees of fault to the display apparatus (3).

10. The work management system according to claim 1, wherein
the management server (10) is configured to output a command according to the approached state to an avoiding apparatus (1c; 2e; 7) that causes the work machine (200) and the worker (100) to avoid contact therebetween.

11. The work management system according to claim 1, wherein
the approached state definition (10c) includes a state where the worker (100) approaches the work machine (200) in a movable state from a blind spot.

12. A work machine (200) comprising:
a management server (10); and
a display apparatus (3) that displays information outputted from the management server (10), wherein
the management server (10) is configured to
assess whether there is approach between the work machine (200) and a worker (100) who performs work near the work machine (200), on a basis of positional information about the work machine (200) measured by a work machine position measuring apparatus (2b1, 2b2) that measures the positional information about the work machine (200), and positional information about the worker (100) measured by a worker position measuring apparatus (1b) that measures the positional information about the worker (100), and,
when assessing that there is approach, assess an approached state of the approach from a state of the work machine (200) measured by a work machine state measuring apparatus (2c1, 2c2, 2c3, 2d) that measures the state of the work machine (200) at a time of the assessment of the approach, on a basis of a preset approached state definition (10c), and **characterised in that** it is configured to
record the state of the work machine (200) measured at the time of the assessment of the approach, in association with the approached state, and output the state of the work machine (200) to the display apparatus (3).

## Patentansprüche

1. Arbeitsmanagementsystem, das Folgendes umfasst:
einen Management-Server (10); und
eine Anzeigevorrichtung (3), die Informationen anzeigt, die von dem Management-Server (10) ausgegeben werden, wobei
der Management-Server (10) konfiguriert ist,
zu beurteilen, ob eine Annäherung zwischen einer Arbeitsmaschine (200) und einem Arbeiter (100), der in der Nähe der Arbeitsmaschine (200) Arbeit durchführt, erfolgt oder nicht, auf der Grundlage von Positionsinformationen über die Arbeitsmaschine (200), die von einer Vorrichtung (2b1, 2b2) zur Messung der Position der Arbeitsmaschine gemessen werden, die die Positionsinformationen über die Arbeitsmaschine (200) misst, und Positionsinformationen über den Arbeiter (100), die von einer Vorrichtung (1b) zur Messung der Position des Arbeiters gemessen werden, die die Positionsinformationen über den Arbeiter (100) misst, und
dann, wenn beurteilt wird, dass eine Annäherung erfolgt, einen Annäherungszustand der Annäherung aus einem Zustand der Arbeitsmaschine (200), der von einer Vorrichtung (2c1, 2c2, 2c3, 2d) zur Messung des Zustands der Arbeitsmaschine gemessen wird, die den Zustand der Arbeitsmaschine (200) zu einer Zeit der Beurteilung der Annäherung misst, auf einer Grundlage einer voreingestellten Definition (10c) des Annäherungszustands zu beurteilen,
**dadurch gekennzeichnet, dass** er konfiguriert ist,
den Zustand der Arbeitsmaschine (200), der zu einer Zeit der Beurteilung der Annäherung gemessen worden ist, in Verbindung mit dem Annäherungszustand aufzuzeichnen, und den Zustand der Arbeitsmaschine (200) in Verbindung mit dem Annäherungszustand an die Anzeigevorrichtung (3) auszugeben.

2. Arbeitsmanagementsystem nach Anspruch 1, wobei
die Vorrichtung (2d) zur Messung des Zustands der Arbeitsmaschine einen Bewegungszustand der Arbeitsmaschine (200) misst.

3. Arbeitsmanagementsystem nach Anspruch 1, wobei
die Arbeitsmaschine (200) eine Frontvorrichtung (202a) aufweist, die mehrere Gelenke aufweist, und
die Vorrichtung (2c1, 2c2, 2c3) zur Messung des Zustands der Arbeitsmaschine jeden Winkel der mehreren Gelenke misst.

4. Arbeitsmanagementsystem nach Anspruch 1, wobei
die Arbeitsmaschine (200) eine Frontvorrichtung (202a) aufweist, die mehrere Gelenke aufweist, und
die Vorrichtung (2c1, 2c2, 2c3, 2d) zur Messung des Zustands der Arbeitsmaschine eine Fahrgeschwindigkeit der Arbeitsmaschine (200) und jede Schwenkgeschwindigkeit der mehreren Gelenke misst.

5. Arbeitsmanagementsystem nach Anspruch 1, wobei
das Arbeitsmanagementsystem eine Vermeidungsvorrichtung (1c; 2e; 7) enthält, die veranlasst, dass die Arbeitsmaschine (200) und der Arbeiter (100) einen Kontakt miteinander vermeiden, und
der Management-Server (10) konfiguriert ist, den Annäherungszustand aus dem Zustand der Arbeitsmaschine (200), der zu der Zeit der Beurteilung der Annäherung gemessen worden ist, und aus einem Betätigungszustand der Vermeidungsvorrichtung (1c; 2e; 7) zu der Zeit der Beurteilung der Annäherung auf der Grundlage der Definition (10c) des Annäherungszustands zu beurteilen.

6. Arbeitsmanagementsystem nach Anspruch 5, wobei
die Vermeidungsvorrichtung (1c; 2e) eine Warnvorrichtung, die eine Warnung an einen Bediener der Arbeitsmaschine (200) oder an den Arbeiter (100) ausgibt, oder eine Verzögerungssteuereinrichtung, die die Arbeitsmaschine (200) verzögert oder anhält, enthält.

7. Arbeitsmanagementsystem nach Anspruch 1, wobei
das Arbeitsmanagementsystem eine Bilderfassungsvorrichtung (6) enthält, die ein Bild der Arbeitsmaschine (200) und des Arbeiters (100) erfasst, und
der Management-Server (10) konfiguriert ist, dann, wenn die Annäherung erfolgt, ein Bild der Arbeitsmaschine (200) und des Arbeiters (100), das mit der Bilderfassungsvorrichtung (6) zu der Zeit der Beurteilung der Annäherung erfasst worden ist, in Verbindung mit dem Annäherungszustand aufzuzeichnen und das Bild an die Anzeigevorrichtung (3) auszugeben.

8. Arbeitsmanagementsystem nach Anspruch 1, wobei
der Management-Server (10) konfiguriert ist, dann, wenn es die Annäherung gibt, ein Wiedergabevideo, das Tätigkeiten der Arbeitsmaschine (200) und des Arbeiters (100) visualisiert, auf der Grundlage der Positionsinformationen über die Arbeitsmaschine (200), der Positionsinformationen über den Arbeiter (100) und des Zustands der Arbeitsmaschine (200), die zu der Zeit der Beurteilung der Annäherung gemessen worden sind, zu erzeugen, das Wiedergabevideo in Verbindung mit dem Annäherungszustand aufzuzeichnen und das Wiedergabevideo an die Anzeigevorrichtung (3) auszugeben.

9. Arbeitsmanagementsystem nach Anspruch 1, wobei
der Management-Server (10) konfiguriert ist, dann, wenn beurteilt wird, dass die Annäherung erfolgt, einen Fehlergrad eines Bedieners der Arbeitsmaschine (200) und einen Fehlergrad des Arbeiters (100) bezüglich eines Auftretens der Annäherung auf einer Grundlage der Messinformationen der Vorrichtung (2b1, 2b2) zur Messung der Position der Arbeitsmaschine, der Vorrichtung (1b) zur Messung der Position des Arbeiters und der Vorrichtung (2c1, 2c2, 2c3, 2d) zur Messung des Zustands der Arbeitsmaschine zu der Zeit der Beurteilung der Annäherung zu berechnen, die Fehlergrade in Verbindung mit dem Annäherungszustand aufzuzeichnen und die Fehlergrade an die Anzeigevorrichtung (3) auszugeben.

10. Arbeitsmanagementsystem nach Anspruch 1, wobei
der Management-Server (10) konfiguriert ist, einen Befehl entsprechend dem Annäherungszustand an eine Vermeidungsvorrichtung (1c; 2e; 7) auszugeben, die die Arbeitsmaschine (200) und den Arbeiter (100) veranlassen, den Kontakt miteinander zu vermeiden.

11. Arbeitsmanagementsystem nach Anspruch 1, wobei
die Definition (10c) des Annäherungszustands einen Zustand enthält, in dem sich der Arbeiter (100) der Arbeitsmaschine (200) in einem Bewegungszustand aus einem toten Winkel annähert.

12. Arbeitsmaschine (200), die Folgendes umfasst:
einen Management-Server (10); und
eine Anzeigevorrichtung (3), die Informationen anzeigt, die von dem Management-Server (10) ausgegeben werden, wobei
der Management-Server (10) konfiguriert ist,
zu beurteilen, ob eine Annäherung zwischen der Arbeitsmaschine (200) und einem Arbeiter (100) erfolgt, der in der Nähe der Arbeitsmaschine (200) Arbeit durchführt, auf einer Grundlage von Positionsinformationen über die Arbeitsmaschine (200), die von einer Vorrichtung (2b1, 2b2) zur Messung der Position der Arbeitsmaschine, die die Positionsinformationen über die Arbeitsmaschine (200) misst, gemessen werden, und Positionsinformationen über den Arbeiter (100), die von einer Vorrichtung (1b) zur Messung der Position des Arbeiters, die die Positionsinformationen über den Arbeiter (100) misst, gemessen werden, und
dann, wenn beurteilt wird, dass eine Annäherung erfolgt, einen Annäherungszustand der Annäherung aus einem Zustand der Arbeitsmaschine (200), der von einer Vorrichtung (2c1, 2c2, 2c3, 2d) zur Messung des Zustands der Arbeitsmaschine gemessen wird, die den Zustand der Arbeitsmaschine (200) zu einer Zeit der Beurteilung der Annäherung misst, auf der Grundlage einer voreingestellten Definition (10c) des Annäherungszustands zu beurteilen,
**dadurch gekennzeichnet, dass** er konfiguriert ist,
den Zustand der Arbeitsmaschine (200), der zu der Zeit der Beurteilung der Annäherung gemessen worden ist, in Verbindung mit dem Annäherungszustand aufzuzeichnen und den Zustand der Arbeitsmaschine (200) in Verbindung mit dem Annäherungszustand an die Anzeigevorrichtung (3) auszugeben.

## Revendications

1. Système de gestion de chantier comprenant :
un serveur de gestion (10) ; et
un appareil d'affichage (3) qui affiche des informations sorties depuis le serveur de gestion (10), dans lequel
le serveur de gestion (10) est configuré pour
évaluer si ou non il y a un rapprochement entre une machine de chantier (200) et un travailleur (100) qui effectue un travail près de la machine de chantier (200), sur la base d'informations de position concernant la machine de chantier (200) mesurées par un appareil de mesurage de position de machine de chantier (2b1, 2b2) qui mesure les informations de position concernant la machine de chantier (200), et d'informations de position concernant le travailleur (100) mesurées par un appareil de mesurage de position de travailleur (1b) qui mesure les informations de position concernant le travailleur (100), et
quand il évalue qu'il y a un rapprochement, évaluer un état rapproché du rapprochement à partir d'un état de la machine de chantier (200) mesuré par un appareil de mesurage d'état de machine de chantier (2c1, 2c2, 2c3, 2d) qui mesure l'état de la machine de chantier (200) à un moment de l'évaluation du rapprochement, sur la base d'une définition d'état rapproché pré-établie (10c), et
**caractérisé en ce qu'**il est configuré pour
enregistrer l'état de la machine de chantier (200) mesuré au moment de l'évaluation du rapprochement, en association avec l'état rapproché, et sortir l'état de la machine de chantier (200) vers l'appareil d'affichage (3) en association avec l'état rapproché.

2. Système de gestion de chantier selon la revendication 1, dans lequel
l'appareil de mesurage d'état de machine de chantier (2d) mesure un état de déplacement de la machine de chantier (200).

3. Système de gestion de chantier selon la revendication 1, dans lequel
la machine de chantier (200) a un dispositif avant (202a) ayant une pluralité d'articulations, et
l'appareil de mesurage d'état de machine de chantier (2c1, 2c2, 2c3) mesure chaque angle de la pluralité d'articulations.

4. Système de gestion de chantier selon la revendication 1, dans lequel
la machine de chantier (200) a un dispositif avant (202a) ayant une pluralité d'articulations, et
l'appareil de mesurage d'état de machine de chantier (2c1, 2c2, 2c3, 2d) mesure une vitesse de circulation de la machine de chantier (200), et chaque vitesse de pivotement de la pluralité d'articulations.

5. Système de gestion de chantier selon la revendication 1, dans lequel
le système de gestion de chantier inclut un appareil d'évitement (1c ; 2e ; 7) qui amène la machine de chantier (200) et le travailleur (100) à éviter un contact entre eux, et
le serveur de gestion (10) est configuré pour évaluer l'état rapproché à partir de l'état de la machine de chantier (200) mesuré au moment de l'évaluation du rapprochement, et un état d'actionnement de l'appareil d'évitement (1c ; 2e ; 7) au moment de l'évaluation du rapprochement, sur la base de la définition d'état rapproché (10c).

6. Système de gestion de chantier selon la revendication 5, dans lequel
l'appareil d'évitement (1c ; 2e) inclut un appareil d'alerte qui émet une alerte vers un opérateur de la machine de chantier (200) ou le travailleur (100) ou un contrôleur de décélération qui fait décélérer ou s'arrêter la machine de chantier (200).

7. Système de gestion de chantier selon la revendication 1, dans lequel
le système de gestion de chantier inclut un appareil de capture d'image (6) qui capture une image de la machine de chantier (200) et du travailleur (100), et
le serveur de gestion (10) est configuré pour, quand il évalue qu'il y a le rapprochement, enregistrer une image de la machine de chantier (200) et du travailleur (100) capturée par l'appareil de capture d'image (6) au moment de l'évaluation du rapprochement, en association avec l'état rapproché, et sortir l'image vers l'appareil d'affichage (3).

8. Système de gestion de chantier selon la revendication 1, dans lequel
le serveur de gestion (10) est configuré pour, quand il évalue qu'il y a le rapprochement, créer une vidéo de reproduction qui permet de visualiser des actions de la machine de chantier (200) et du travailleur (100) sur la base des informations de position concernant la machine de chantier (200), des informations de position concernant le travailleur (100), et de l'état de la machine de chantier (200) qui sont mesurés au moment de l'évaluation du rapprochement, enregistrer la vidéo de reproduction en association avec l'état rapproché, et sortir la vidéo de reproduction vers l'appareil d'affichage (3).

9. Système de gestion de chantier selon la revendication 1, dans lequel
le serveur de gestion (10) est configuré pour, quand il évalue qu'il y a le rapprochement, calculer un degré de défaillance d'un opérateur de la machine de chantier (200) et un degré de défaillance du travailleur (100) concernant une occurrence du rapprochement sur la base d'informations de mesurage de l'appareil de mesurage de position de machine de chantier (2b1, 2b2), de l'appareil de mesurage de position de travailleur (1b), et de l'appareil de mesurage d'état de machine de chantier (2c1, 2c2, 2c3, 2d) au moment de l'évaluation du rapprochement, enregistrer les degrés de défaillance en association avec l'état rapproché, et sortir les degrés de défaillance vers l'appareil d'affichage (3).

10. Système de gestion de chantier selon la revendication 1, dans lequel
le serveur de gestion (10) est configuré pour sortir un ordre selon l'état de rapprochement vers un appareil d'évitement (1c ; 2e ; 7) qui amène la machine de chantier (200) et le travailleur (100) à éviter un contact entre eux.

11. Système de gestion de chantier selon la revendication 1, dans lequel
la définition d'état rapproché (10c) inclut un état dans lequel le travailleur (100) se rapproche de la machine de chantier (200) dans un état de déplacement depuis un angle mort.

12. Machine de chantier (200) comprenant :
un serveur de gestion (10) ; et
un appareil d'affichage (3) qui affiche des informations sorties depuis le serveur de gestion (10), dans laquelle
le serveur de gestion (10) est configuré pour
évaluer s'il y a un rapprochement entre la machine de chantier (200) et un travailleur (100) qui effectue un travail près de la machine de chantier (200), sur la base d'informations de position concernant la machine de chantier (200) mesurées par un appareil de mesurage de position de machine de chantier (2b1, 2b2) qui mesure les informations de position concernant la machine de chantier (200), et d'informations de position concernant le travailleur (100) mesurées par un appareil de mesurage de position de travailleur (1 b) qui mesure les informations de position concernant le travailleur (100), et
quand il évalue qu'il y a un rapprochement, évaluer un état rapproché du rapprochement à partir d'un état de la machine de chantier (200) mesuré par un appareil de mesurage d'état de machine de chantier (2c1, 2c2, 2c3, 2d) qui mesure l'état de la machine de chantier (200) à un moment de l'évaluation du rapprochement, sur la base d'une définition d'état rapproché pré-établie (10c), et
**caractérisée en ce qu'**elle est configurée pour
enregistrer l'état de la machine de chantier (200) mesuré au moment de l'évaluation du rapprochement, en association avec l'état rapproché, et sortir l'état de la machine de chantier (200) vers l'appareil d'affichage (3).
